# FASCICULE DE BREVET EUROPEEN

(11) **EP 2 405 378 B1**
(45) Date de publication et mention de la délivrance du brevet: **16.11.2016**
(21) Numéro de dépôt: 11171946.4
(22) Date de dépôt: 29.06.2011
(51) Int. Cl.: H04L 29/06, H04W 4/00, H04W 12/06, H04W 12/08

(54) **Procédé d'exécution d'une application sécurisée dans un dispositif NFC**
Ausführungsverfahren einer gesicherten Anwendung in einer NFC-Vorrichtung
Method of executing a secure application in an NFC device

(30) Priorité: 08.07.2010 FR 1002869
(43) Date de publication de la demande: 11.01.2012
(73) Titulaire: Inside Secure, 13590 Meyreuil (FR)
(72) Inventeur: Chew, Gary, 13090 Aix-en-Provence (FR); Walton, Charles, Marshfield, MA 02050 (US)
(74) Mandataire: de Roquemaurel, Bruno

(56) Documents cités:
- FR-A1- 2 935 510

## Description

La présente invention concerne l'installation et l'exécution d'une application sécurisée dans un dispositif portable de type téléphone mobile ou équivalent.

La présente invention concerne également, mais non exclusivement, la technologie NFC (Near Field Communication) ainsi que des architectures de dispositifs NFC ou "chipset NFC", c'est-à-dire des ensembles de puces comprenant au moins un composant NFC.

La technologie NFC est actuellement développée par un consortium industriel regroupé sous le nom de Forum NFC (http://www.nfc-forum.org). La technologie NFC est dérivée de la technologie RFID (Radio Frequency Identification) et utilise des contrôleurs NFC présentant plusieurs modes de fonctionnement, notamment un mode lecteur ("Reader Mode"), un mode émulation de carte ("Card emulation") et un mode "peer-to-peer".

D'importants développements ont été réalisés ces dernières années pour intégrer un contrôleur NFC dans des objets portables de type téléphone mobile ou équivalent (par exemple les assistants numériques personnels ou "PDA" équipés d'une fonction de téléphone mobile). Cette intégration vise notamment à doter de tels objets portables d'une application de paiement ou de contrôle d'accès (métro, autobus, etc.), et d'autres applications de la technologie NFC comme la lecture d'étiquettes ou de cartes électroniques sans contact.

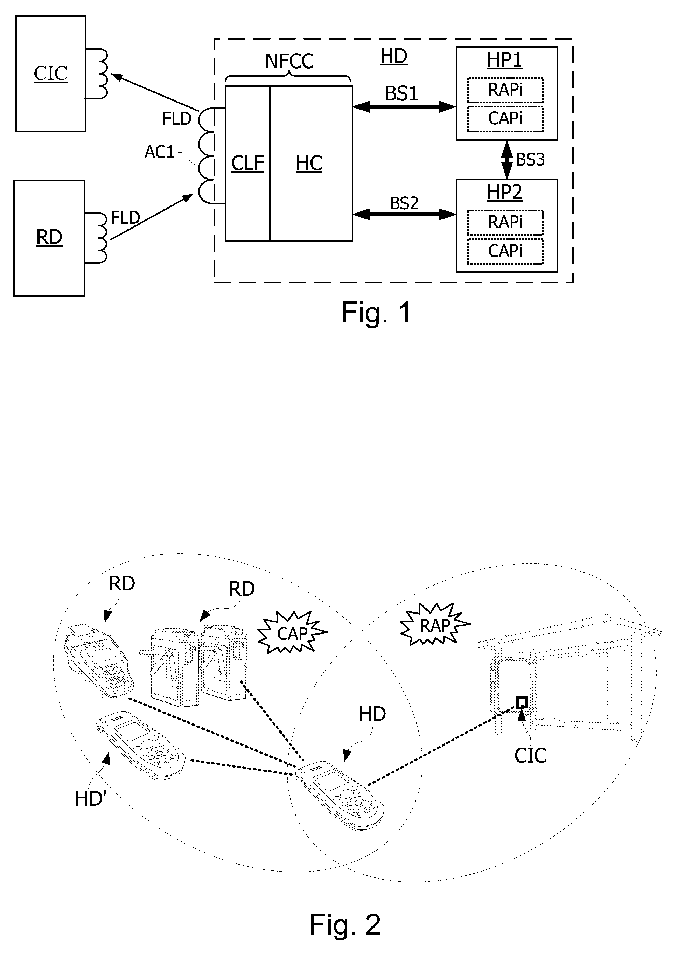

La figure 1 représente un dispositif NFC du type dispositif portable HD ("Handheld Device") tel un téléphone portable, un PDA (Assistant Numérique Personnel), etc. Le dispositif HD comprend un contrôleur NFC référencé NFCC et au moins un processeur hôte processeur HP1, HP2 relié au contrôleur NFCC par un bus BS1, par exemple de type SWP ("Single Wire Protocol"). Un processeur hôte HP2 peut être une carte à circuit intégré désignée UICC ("Universal Integrated Circuit Card"), par exemple de type carte SIM (Subscriber Identity Module). Un processeur hôte HP1 peut aussi être le processeur de bande de base ("Baseband") d'un téléphone mobile (soit le processeur en charge des communications téléphoniques). Dans ce cas, le processeur hôte HP1 peut être connecté au contrôleur NFCC au moyen d'une liaison asynchrone BS2 gérée par des ports UART ("Universal Asynchronous Receiver Transiter"). Accessoirement, le processeur HP2 peut aussi être directement relié au processeur HP1 par un bus BS3 de type ISO 7816.

Les ressources du contrôleur NFCC sont mises à la disposition du processeur hôte HP1 pour lui permettre de gérer des applications sans contact RAPi, CAPi. Le contrôleur NFCC comprend un contrôleur hôte HC et une interface sans contact CLF ("Contactless Front End Interface") équipée d'une bobine d'antenne AC1. En pratique, le contrôleur hôte HC et l'interface CLF peuvent être réalisés sur une même puce de semi-conducteur, comme la puce MicroRead®commercialisée par la demanderesse, ou être formés de deux puces distinctes, comme les puces "PicoRead® Microcontroller" et "PicoRead®RF Interface" commercialisées par la demanderesse.

L'interface CLF du contrôleur NFCC peut généralement fonctionner selon plusieurs technologies RF, par exemple de "Type A" telles que définies par ISO/IEC 14443 parties 2, 3 et 4, de "Type B'" telle que définie par ISO/IEC 14443-2 avec un tramage normalisé ("standard framing") tel que défini par ISO/IEC 14443-3, et de "Type F" telle que définie par ISO 18092 en tant que mode passif à 212 et 424 ko/s (kilo octets par seconde) ou par la norme industrielle japonaise JIS X 6319-4. Chaque technologie RF, ou protocole de communication sans contact, définit une fréquence d'émission du champ magnétique, une méthode de modulation du champ magnétique pour transmettre des données en mode actif, une méthode de modulation de charge pour transmettre des données en mode passif, une méthode de codage des données, un format de trame de données, etc.

Des exemples d'application du dispositif NFC sont illustrés sur la figure 2 qui représente un dispositif portatif HD équipé du dispositif NFC de la figure 1, le dispositif HD prenant ici la forme d'un téléphone mobile. On distingue des applications lecteur RAP ("Reader Applications") et des applications carte CAP ("Card Applications")

### Applications lecteur (RAP)

Le contrôleur NFCC fonctionne comme un lecteur NFC pour conduire une transaction avec un circuit intégré sans contact CIC ("Contactless Integrated Circuit"). Une application lecteur RAP, RAPi est exécutée par le processeur hôte HP1 (Cf. Fig. 1). Ce dernier place l'interface CLF dans un mode de fonctionnement actif où elle émet un champ magnétique FLD, envoie des données par modulation du champ magnétique et reçoit des données par modulation de charge et couplage inductif. Ce type d'application peut être gratuit (par exemple lecture d'une étiquette électronique ou "tag" présente dans un abribus contenant les horaires des lignes de bus) et être exécutée par un processeur non sécurisé. Le processeur hôte HP1 peut dans ce cas être le processeur de bande de base du téléphone mobile. S'il s'agit d'une application payante, le processeur hôte exécutant l'application est de préférence un processeur sécurisé, par exemple un processeur de carte SIM, car l'accès au service nécessite une identification/authentification de l'abonné.

### Applications carte (CAP)

Le principe de fonctionnement du mode émulation de carte est décrit par le brevet EP 1 327 222 (US 7 098 770) au nom de la demanderesse. Une application carte CAP, CAPi est exécutée par le processeur hôte HP1 (Cf. Fig. 1). Ce dernier place le contrôleur NFCC dans un mode de fonctionnement passif et forme avec le contrôleur NFCC, l'équivalent d'un circuit intégré sans contact, qui est vu par un lecteur RD comme une carte sans contact. Ainsi, le contrôleur NFCC n'émet pas de champ magnétique, reçoit des données en démodulant un champ magnétique FLD émis par le lecteur RD et émet des données par modulation de l'impédance de son circuit d'antenne AC1 (modulation de charge). Les applications concernées sont généralement des applications de paiement ou de contrôle d'accès payant (machine de paiement, entrée de métro, etc.). Le dispositif portatif HD est donc utilisé dans ce cas comme une carte à puce. Ce type d'application est le plus souvent sécurisé et le processeur hôte HP1, HP2 qui exécute le programme applicatif est alors un processeur sécurisé, par exemple un processeur de carte SIM, comportant des fonctions de cryptographie pour l'authentification de l'utilisateur et/ou l'authentification du dispositif portable vis-à-vis d'un terminal de transaction.

Diverses architectures de dispositifs NFC dédiées à la téléphonie ont été envisagées, certaines utilisant le processeur de la carte SIM pour gérer les applications NFC, d'autres prévoyant un second processeur sécurisé, les deux solutions pouvant être également combinées.

En raison notamment d'un nombre d'intervenants important et de la complexité des relations entre ces intervenants, la mise en oeuvre d'une application sécurisée dans un dispositif NFC soulève des difficultés freinant le développement commercial des applications NFC sécurisées. En effet, le dispositif portable, le processeur sécurisé et le contrôleur NFCC sont produits produits par des fabricants différents. Le processeur sécurisé (carte Sim) est généralement remis à un utilisateur final par un opérateur de réseau mobile, après avoir reçu des informations de sécurité telles que des identifiants, des clés secrètes et des certificats liés à l'utilisateur. Le dispositif portable peut être remis à l'utilisateur final par l'opérateur de réseau mobile ou une autre entité. L'application est réalisée par un développeur de logiciel. Si elle fait intervenir des transactions de paiement, l'application est certifiée par un organisme de certification lié à un organisme bancaire. Un composant logiciel d'une application, couramment appelé "applet", est installé de manière sécurisée dans le processeur hôte sécurisé et personnalisé avec des données d'identification de l'utilisateur et du dispositif portable et des clés de chiffrement propres à l'application et à l'utilisateur. L'utilisateur est également référencé de manière sécurisée auprès d'un organisme bancaire. Une transaction de paiement fait intervenir un terminal de paiement qui est produit par encore un autre fabricant, et qui doit également avoir été certifié par un organisme de certification. L'utilisateur du terminal de paiement, un commerçant, doit également être référencé de manière sécurisé auprès d'un organisme bancaire. Les opérateurs de réseau mobiles sont généralement réticents à rendre les fonctions et données de sécurité des cartes SIM accessibles à d'autres intervenants tels que des fournisseurs d'applications sécurisées ou des services de paiement par carte. Il en résulte que l'installation d'une application nécessitant une authentification de l'utilisateur dans un dispositif portable soulève de nombreuses difficultés. Ces difficultés apparaissent à chaque fois qu'une application doit être installée notamment dans un processeur sécurisé du dispositif portable, et en particulier lorsqu'un utilisateur change de dispositif portable (téléphone mobile) et doit réinstaller les applications précédemment installées dans un ancien dispositif portable.

Par ailleurs, face à un faible nombre d'applications disponibles, les fabricants de téléphones mobiles ne voient pas l'intérêt d'augmenter le coût de leurs téléphones en y intégrant un contrôleur NFC et le cas échéant un processeur sécurisé supplémentaire.

Le document EP 2 935 510 décrit un procédé de communication entre deux dispositifs NFC dans lequel un premier des deux dispositifs demande l'exécution d'une application au second dispositif. Si l'application est installée dans le second dispositif, le second dispositif exécute l'application et si elle n'est pas installée, un processus d'installation de l'application est déclenché incluant une authentification préalable du second dispositif.

Il est donc souhaitable de réaliser une architecture de déploiement d'applications NFC, qui ne nécessite pas la contribution d'opérateurs de réseau mobile, tout en offrant un niveau de sécurité compatible avec les services de paiement et de contrôle d'accès payant. Il est également souhaitable que cette architecture ne nécessite pas la mise en oeuvre d'un serveur centralisé de confiance pour assurer la gestion (émission, contrôle, révocation) de données sécrètes attribuées à chaque dispositif mobile pour chaque application. Il est aussi souhaitable que chaque application NFC installée dans un dispositif portable ne soit pas attachée à un dispositif portable particulier, mais puisse être facilement activée dans un autre dispositif portable. Il est également souhaitable que le fournisseur d'une application puisse facilement donner accès à l'application à un utilisateur, en minimisant l'intervention de ce dernier, et ce sans avoir à faire intervenir l'opérateur de réseau mobile ou d'autres entités.

Des modes de réalisation concernent un procédé d'exécution d'une application sécurisée dans un dispositif NFC, le procédé comprenant des étapes durant lesquelles : une liaison sans contact est établie entre un premier dispositif NFC et un second dispositif NFC, le premier dispositif NFC transmet par la liaison sans contact un identifiant d'un processeur sécurisé du premier dispositif NFC, le second dispositif NFC transmet par la liaison sans contact un identifiant d'application d'une application installée dans le premier dispositif NFC, le processeur sécurisé transmet par la liaison sans contact des premières données d'authentification permettant d'authentifier le processeur sécurisé du premier dispositif NFC, et le second dispositif NFC transmet à un serveur d'application les premières données d'authentification, le serveur d'application transmet à un serveur d'authentification les premières données d'authentification et des secondes données d'authentification permettant d'authentifier l'application correspondant à l'identifiant d'application, le serveur d'authentification vérifie les données d'authentification, et autorise les deux dispositifs NFC à exécuter une transaction durant l'exécution de l'application uniquement si le processeur sécurisé et l'application sont authentifiés.

Selon un mode de réalisation, le procédé comprend, avant l'exécution de l'application, des étapes d'installation de l'application dans le premier dispositif NFC, dans lesquelles le premier dispositif NFC transmet au serveur d'authentification une requête d'installation d'application comprenant l'identifiant d'application de l'application, et les premières données d'authentification permettant d'authentifier le processeur sécurisé du premier dispositif NFC, le serveur d'authentification vérifie les premières données d'authentification, et si le processeur sécurisé est authentifié, transmet au premier dispositif NFC une adresse de téléchargement de l'application, et le premier dispositif NFC télécharge l'application à partir de l'adresse de téléchargement reçue et installe l'application téléchargée.

Selon un mode de réalisation, à la suite de l'installation de l'application, le premier dispositif NFC informe le serveur d'authentification de l'installation de l'application en lui fournissant l'identifiant de l'application installée et les premières données d'authentification, et le serveur d'authentification vérifie les premières données d'authentification, et si le processeur sécurisé est authentifié, le serveur d'authentification mémorise l'identifiant d'application en association avec l'identifiant du processeur sécurisé du premier dispositif NFC.

Selon un mode de réalisation, le serveur d'authentification ne transmet pas au premier dispositif NFC une adresse de téléchargement de l'application si l'identifiant d'application est déjà mémorisé en association avec l'identifiant du processeur sécurisé du premier dispositif NFC.

Selon un mode de réalisation, le serveur d'authentification n'autorise pas l'exécution de l'application par les deux dispositifs NFC si l'identifiant d'application n'est pas mémorisé en association avec l'identifiant du processeur sécurisé du premier dispositif NFC.

Selon un mode de réalisation, les premières données d'authentification comprennent l'identifiant du processeur sécurisé et un premier cryptogramme calculé par le processeur sécurisé en appliquant à l'identifiant du processeur sécurisé, un calcul cryptographique utilisant une clé secrète mémorisée par le processeur sécurisé.

Selon un mode de réalisation, les secondes données d'authentification comprennent l'identifiant du processeur sécurisé, l'identifiant d'application et un second cryptogramme calculé par le serveur d'application en appliquant un calcul cryptographique à l'identifiant d'application, utilisant une clé secrète propre à l'application.

Selon un mode de réalisation, le second cryptogramme est calculé en appliquant le calcul cryptographique à l'identifiant d'application, et au premier cryptogramme.

Selon un mode de réalisation, le premier et/ou le second cryptogrammes sont calculés à l'aide d'un algorithme de chiffrement symétrique utilisant une clé secrète, ou d'un algorithme de chiffrement asymétrique utilisant une clé privée, ou d'une fonction de hachage appliquée aux données à chiffrer et à la clé secrète.

Selon un mode de réalisation, la vérification de chacun des premier et second cryptogrammes est effectuée en recalculant le cryptogramme à partir des mêmes données et en utilisant une clé de chiffrement accessible au serveur d'authentification.

Des modes de réalisation concernent également un système d'exécution d'une application sécurisée dans un dispositif NFC, le système comprenant : un premier dispositif NFC comprenant un composant NFC pour établir une communication sans contact avec un autre dispositif NFC, et un processeur sécurisé connecté au composant NFC, un second dispositif NFC connecté à un serveur d'application pour exécuter une application avec autre dispositif NFC. Selon un mode de réalisation, le système comprend un serveur d'authentification accessible au serveur d'application et au premier dispositif NFC, le système étant configuré pour exécuter le procédé tel que défini précédemment.

Des exemples de réalisation de l'invention seront décrits dans ce qui suit, à titre non limitatif en relation avec les figures jointes parmi lesquelles :
la figure 1 décrite précédemment représente schématiquement l'architecture d'un dispositif NFC classique,
la figure 2 décrite précédemment représente schématiquement des exemples d'applications mises en oeuvre dans le dispositif NFC,
la figure 3 représente schématiquement l'architecture d'un système de déploiement d'applications NFC,
les figures 4A à 4D représentent des tables d'une ou plusieurs bases de données utilisées par le système de déploiement,
la figure 5 représente des étapes d'activation d'une transaction impliquant l'exécution d'une application, entre un processeur hôte sécurisé du dispositif NFC et un lecteur NFC, selon un mode de réalisation,
la figure 6 représente des étapes d'installation et d'exécution d'une application dans un dispositif NFC, selon un mode de réalisation.
la figure 7 représente des étapes d'une procédure d'autorisation d'une transaction déclenchée par un dispositif d'interaction NFC durant l'exécution d'une application, selon un mode de réalisation,

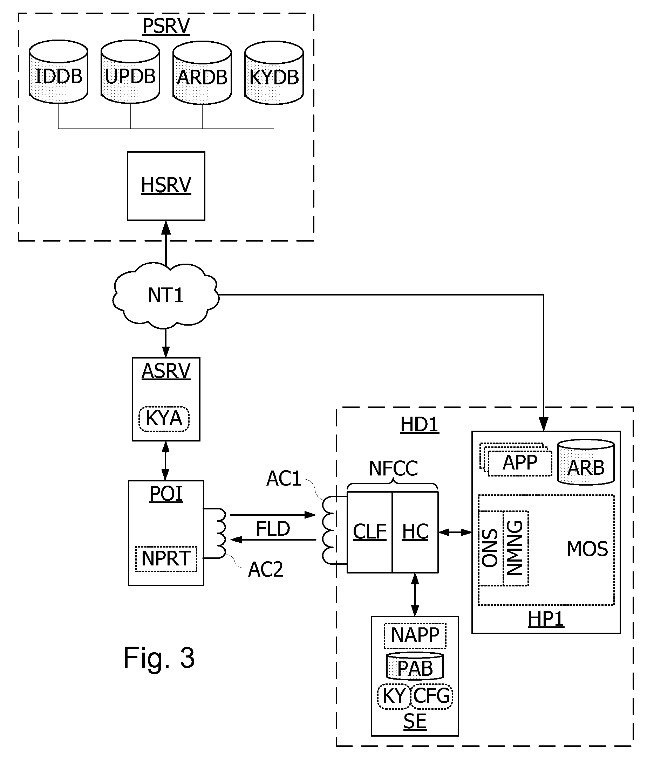

La figure 3 représente l'architecture d'un système de déploiement d'application NFC. Le système de déploiement d'application comprend une pluralité de dispositifs portables NFC HD1 et de dispositifs d'interaction POI avec lesquels les dispositifs HD1 peuvent établir une communication sans contact NFC. Par souci de clarté, la figure 3 ne présente qu'un dispositif HD1 et un seul dispositif POI. Les dispositifs POI peuvent être des lecteurs sans contact NFC ou des circuits intégrés sans contact NFC. Les dispositifs POI sont chacun connectés ou connectables à un serveur d'application ASRV permettant l'exécution d'une transaction dans le cadre d'une application, avec un dispositif HD1 connecté au dispositif POI. Le dispositif POI comprend une antenne AC2 pour établir des communications sans contact NFC avec un dispositif NFC. Le dispositif POI peut être connecté au serveur ASRV soit directement, soit par l'intermédiaire d'un ou plusieurs réseaux de transmission de données.

Le dispositif HD1 comprend des processeurs hôte HP1, SE et un composant NFC référencé NFCC. Le processeur HP1 est par exemple un processeur de band de base ("baseband") de téléphone mobile, et le processeur hôte SE est un processeur sécurisé. Le composant NFCC comprend un contrôleur hôte HC connecté aux processeurs HP1 et SE et un circuit d'interface NFC référencé CLF connecté à un circuit d'antenne AC1. Le processeur HP1 comprend un système d'exploitation MOS et peut exécuter une ou plusieurs applications APP installées dans une mémoire du processeur HP1 (ou accessible au processeur HP1). Le processeur SE peut être le processeur d'une carte SIM ou un processeur distinct présentant au moins le même niveau de sécurité.

Selon un mode de réalisation, le système d'exploitation MOS comprend un logiciel pilote ONS permettant au processeur HP1 d'accéder à certaines fonctions du processeur SE par l'intermédiaire du contrôleur NFCC et de recevoir des notifications émises par le processeur SE. Le processeur HP1 comprend également une base de données d'applications ARB comprenant des références d'applications sécurisées APP installées dans la mémoire du processeur HP1. Le processeur SE comprend un composant logiciel d'application, appelé "applet NAPP", un identifiant du processeur SE et un identifiant du composant NAPP, des clés de chiffrement KY, une liste PAB d'identifiants d'applications sécurisées installées dans le dispositif HD1, et des données de configuration du dispositif HD1 (type du dispositif, dénomination et version du système d'exploitation MOS, etc.). Les applications sécurisées APP peuvent être des applications de paiement, de contrôle d'accès, et plus généralement, des applications nécessitant une authentification. Le composant logiciel NAPP peut également mémoriser des informations de configuration CFG du dispositif HD1, ces informations comprenant notamment un type de dispositif et un numéro de version du système d'exploitation MOS. Le système d'exploitation MOS comprend également un logiciel de contrôle d'application à sécuriser NMNG communiquant avec le composant logiciel NAPP par l'intermédiaire du pilote ONS et du contrôleur NFCC. Le logiciel NMNG est configuré pour collecter des informations de configuration du dispositif HD1, et les transmettre au processeur SE. Le logiciel NMNG est lié de manière unique au composant logiciel NAPP de manière à masquer la présence du composant logiciel aux autres applications installées dans le processeur HP1. Ainsi, seul le logiciel NMNG est notifié lorsque le composant logiciel NAPP est sollicité par l'intermédiaire d'une liaison sans contact établie par le contrôleur NFCC, pour exécuter une application sécurisée. Le logiciel NMNG assure également une fonction de gestion de préférences de l'utilisateur du dispositif HD1.

Le système de déploiement d'application comprend un serveur de base de données HSRV donnant accès à une ou plusieurs bases de données IDDB, UPDB, ARDB, KYDB. Le logiciel NMNG assure également une fonction d'interface entre le serveur HSRV et le composant logiciel NAPP. Le serveur HSRV gère des identifiants de composants logiciels NAPP installés dans les processeurs SE des dispositifs HD1, des identifiants de fournisseurs d'application, et fournit des services d'authentification. Lors de sa fabrication, le processeur SE de chaque dispositif HD1 reçoit des identifiants uniques SEID et NID de processeur SE et de composant logiciel NAPP, des clés secrètes de chiffrement symétrique et/ou des clés publiques et privées de chiffrement asymétrique associées à un certificat. Le serveur HSRV assure des fonctions d'enregistrement et de radiation d'utilisateurs, de processeurs SE, de composants logiciels NAPP, de fournisseurs d'application et d'applications. Chaque application est donc identifiée par un identifiant d'application unique.

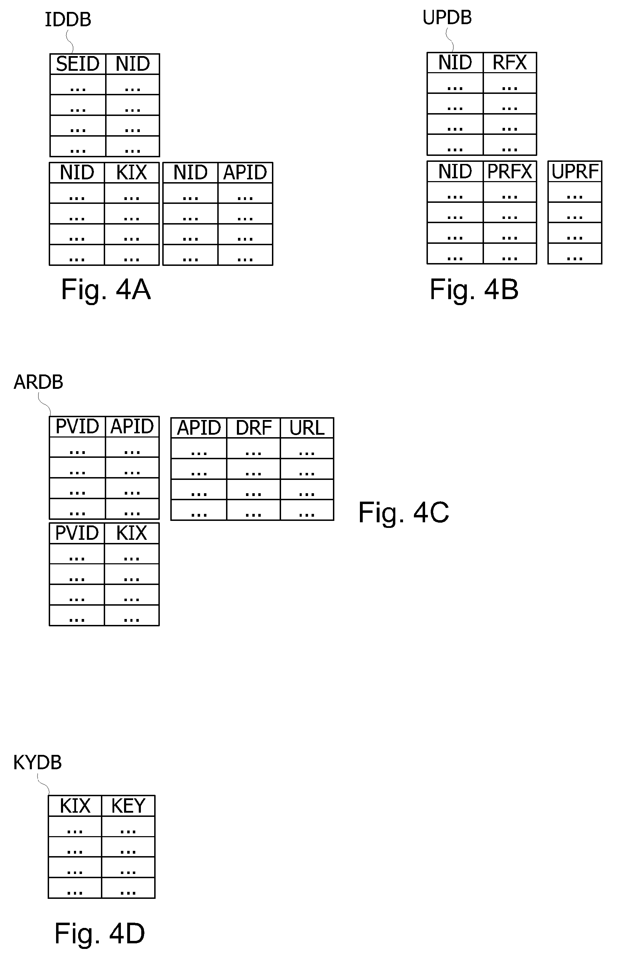

Le contenu de la base ou des bases de données IDDB, UPDB, ARDB, KYDB est représenté sur les figures 4A à 4D. Sur la figure 4A, la base de données IDDB est configurée pour établir une correspondance entre des identifiants SEID, NID du processeur SE et du composant logiciel NAPP de chaque processeur SE mis en service dans un dispositif HD1. La base IDDB établit également une correspondance entre l'identifiant NID et un index de clé KIX permettant d'accéder aux clés de chiffrement associées, mémorisées par le processeur SE. La base de données IDDB est donc complétée à chaque fois qu'un processeur SE est mis en service dans un dispositif HD1. La base de données IDDB comprend également une table de correspondance entre des identifiants de composants logiciels NID installés dans un processeur SE et des identifiants d'application APID, cette table indique donc si une application ayant pour identifiant APID est installée dans un dispositif HD1 dont le composant logiciel NAPP correspond à l'identifiant NID. La base IDDB est donc également mise à jour à chaque fois qu'une application est installée ou effacée d'un dispositif HD1.

Sur la figure 4B, la base de données UPDB est configurée pour établir une correspondance entre l'identifiant NID, une référence d'un utilisateur RFX, une correspondance entre l'identifiant NID et un index PRFX référençant des informations de profil UPRF relatives à l'utilisateur du dispositif HD1. La base de données UPDB est complétée lors de l'installation d'une première application dans un dispositif HD1, et mise à jour à chaque fois que les informations de profil d'un utilisateur sont modifiées.

Sur la figure 4C, la base de données ARDB est configurée pour établir une correspondance entre des identifiants de fournisseurs d'application PVID et des identifiants d'applications APID pour un type de dispositif HD1, une correspondance entre chaque identifiant PVID et un index de clé de chiffrement KIX permettant d'accéder à des clés de chiffrement KIX propres au fournisseur d'application. La base ARDB établit également une correspondance entre chaque identifiant d'application APID et une référence DRF de type de dispositif HD1 dans lesquels l'application peut être installée et exécutée, et entre chaque référence DRF et une adresse de téléchargement URL de l'application correspondant à l'identifiant APID. Chaque identifiant APID permet ainsi d'identifier chaque instance d'application adaptée à un type de dispositif HD1 et d'accéder à une adresse de téléchargement de l'instance d'application. La base ARDB est mise à jour à chaque enregistrement d'une nouvelle application prévue pour un type de dispositif HD1.

Sur la figure 4D, la base de données KYDB est configurée pour établir une correspondance entre chaque index de clé (de processeur SE ou de fournisseur d'application) et des clés de chiffrement. L'accès à la base de données KYDB peut être protégé par un serveur spécifique configuré pour recevoir des index de clés KIX et des données à chiffrer ou à déchiffrer et pour fournir en réponse des cryptogrammes résultant du chiffrement ou déchiffrement des données fournies à l'aide des clés référencées par l'index de clé KIX fourni. La base KYDB est donc modifiée à chaque mise en service d'un nouveau processeur SE et à chaque enregistrement d'une nouvelle application pour un type de dispositif HD1.

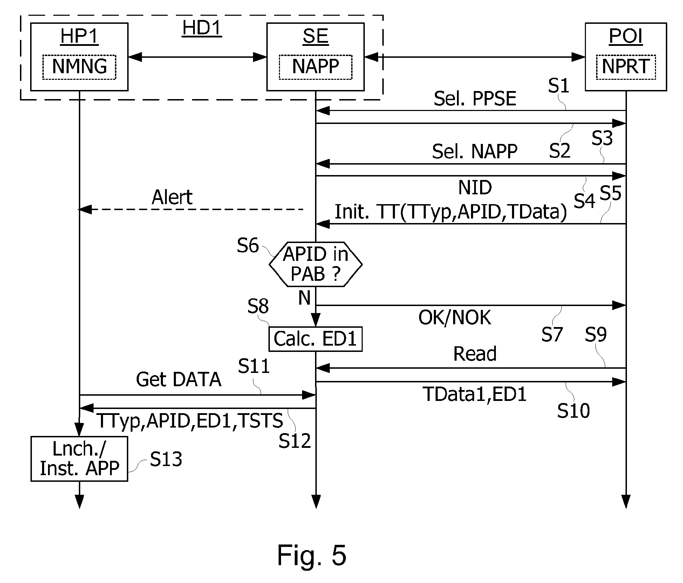

La figure 5 représente une séquence d'étapes S1 à S13 déclenchée lorsqu'un dispositif HD1 est placé en communication sans contact avec un dispositif POI. Cette séquence est exécutée par le composant logiciel NAPP installé dans le processeur SE du dispositif HD1 mis en communication avec le dispositif POI par l'intermédiaire du contrôleur NFCC, par un logiciel de lecteur sans contact NPRT installé dans le dispositif POI et par le logiciel de gestion NMNG du processeur HP1.

A l'étape S1, le logiciel NPRT envoie le cas échéant un message de sélection d'une application de paiement PPSE (Proximity Payment System Environment) au contrôleur NFCC. Le contrôleur NFCC retransmet le message PPSE au processeur SE. A l'étape S2, le processeur SE répond au message de sélection. A l'étape S3, le logiciel de lecteur NPRT envoie au processeur SE un message de sélection du composant logiciel NAPP installé dans le processeur SE. En effet, plusieurs autres composants logiciels peuvent être installés dans le processeur SE. A l'étape S4, le composant logiciel NAPP répond au logiciel NPRT en lui fournissant son identifiant NID. A l'étape S5, le dispositif POI envoie un message d'initialisation de transaction comprenant une information de type de transaction TTyp, un identifiant d'application APID, et des données de transaction Tdata. A l'étape S6, le composant logiciel NAPP vérifie si l'identifiant APID figure ou non dans la liste PAB d'identifiants d'applications installées dans le processeur HP1. A l'étape S7, le composant logiciel NAPP répond au message d'initialisation en indiquant si l'application APID est installée ou non dans le processeur HP1. Quelle que soit la réponse du composant logiciel NAPP, le dispositif POI exécute l'étape S9 où il émet un ordre de lecture. Parallèlement à l'étape S8 le composant logiciel NAPP lance un calcul cryptographique pour obtenir un cryptogramme ED1. A la suite de la réception de l'ordre de lecture à l'étape S9, le composant logiciel NAPP émet en réponse à l'étape S10 le cryptogramme ED1, ainsi que des données standard de transaction de paiement Tdata1 si l'application demandée est installée. Il est à noter que les étapes S1 à S9 sont conformes au standard de paiement par carte EMV (Europay, MasterCard and Visa).

Durant les étapes S3 à S8, le composant logiciel NAPP émet une alerte à destination du logiciel de gestion NMNG installé dans le processeur HP1, pour l'informer qu'il a été sollicité par l'intermédiaire du contrôleur NFCC. A l'étape S11, le logiciel NMNG transmet au composant logiciel NAPP un message de demande de données. A l'étape S12, le composant logiciel NAPP transmet en réponse au logiciel NMNG le type de transaction TTyp reçu, l'identifiant d'application APID, le cryptogramme ED1 et une information d'état STS. A l'étape S13, le logiciel NMNG lance l'application dans le processeur HP1 ou une procédure d'installation de cette application si celle-ci n'est pas installée.

Le cryptogramme ED1 est par exemple calculé en appliquant une fonction cryptographique telle qu'une fonction de chiffrement symétrique comme AES (Advanced Encryption Standard) utilisant une clé mémorisée par le processeur SE, à l'identifiant NID, l'identifiant d'application APID, et éventuellement d'autres données. Le cryptogramme ED1 peut également être calculé à l'aide d'une fonction de hachage telle que SHA (Secure Hash Algorithm) ou MD5 (Message Digest 5) appliquées aux mêmes données, ainsi qu'à la clé mémorisée par le processeur SE. Le cryptogramme ED1 peut aussi être calculé par une fonction de chiffrement asymétrique utilisant une clé privée mémorisée par le processeur SE, la clé publique correspondante étant mémorisée dans la base KYDB. Les autres données utilisées dans le calcul du cryptogramme ED1 sont transmises avec celui-ci pour permettre par la suite sa vérification.

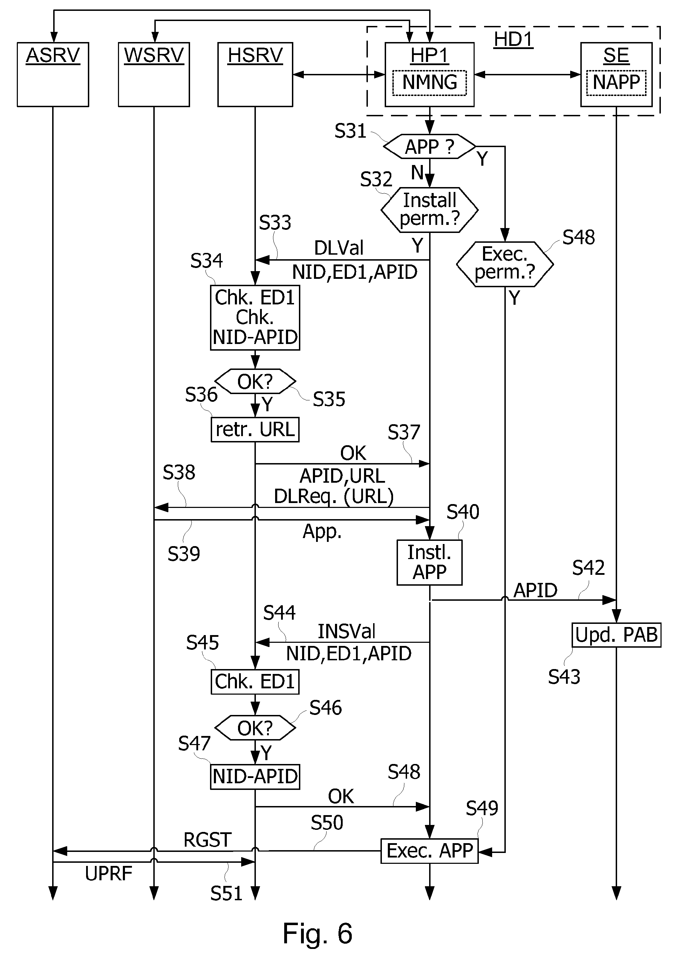

La figure 6 représente une séquence d'étapes S31 à S52 pouvant être exécutée à l'étape S13 par le dispositif HD1, et par les serveurs HSRV et ASRV. A l'étape S31, le logiciel NMNG du processeur HP1 détermine si l'application ayant pour identifiant APID est installée dans le dispositif HD1 en consultant la base de données ARB. Si l'application est déjà installée, le processeur HP1 exécute l'étape S48 où il peut être prévu de demander à l'utilisateur s'il accepte d'activer l'application. Si l'utilisateur accepte d'activer l'application, l'application est lancée à l'étape S49. Si l'application n'est pas installée dans le dispositif HD1, le processeur HP1 exécute l'étape S32 où il peut être prévu de demander à l'utilisateur s'il souhaite installer l'application dans le dispositif HD1. Si l'utilisateur accepte d'installer l'application, le processeur HP1 émet une requête de validation de téléchargement DLVal à destination du serveur HSRV, cette requête étant accompagnée de l'identifiant du composant logiciel NID, du cryptogramme ED1 calculé à l'étape S7, et de l'identifiant d'application APID à télécharger. A l'étape S34, le serveur HSRV reçoit cette requête et vérifie le cryptogramme ED1 à l'aide de l'identifiant NID et des informations contenues dans les bases de données IDDB, KYDB et vérifie l'existence de l'identifiant d'application dans la base ARDB. Le serveur HSRV vérifie également que l'application n'a pas déjà été installée dans le dispositif HD1 en vérifiant dans la base IDDB que l'identifiant NID n'est pas déjà lié à l'identifiant d'application APID. La vérification de la liaison entre l'identifiant NID et l'identifiant d'application peut tenir compte du fait que l'application en cours d'installation est une mise à jour d'une application précédemment installée dans le dispositif HD1. Dans ce cas, l'installation est autorisée par le serveur HSRV. A l'étape S35, si toutes ces vérifications sont satisfaites, le serveur HSRV exécute l'étape S36 où il détermine une adresse de téléchargement URL de l'application en accédant à la base ARDB à l'aide de l'identifiant APID. A l'étape S37, le serveur HSRV répond à la requête DLVal en fournissant le résultat des vérifications effectuées à l'étape S34. Si ces vérifications sont satisfaites, le serveur HSRV transmet également au processeur HP1 l'adresse de téléchargement URL de l'application et éventuellement l'identifiant de l'application APID. Aux étapes S38 et S39 suivantes, le processeur HP1 reçoit ces informations du serveur HSRV, et si le téléchargement est autorisé par le serveur HSRV, procède au téléchargement de l'application en accédant à un serveur WSRV à l'adresse URL reçue. A l'étape S40, le processeur HP1 lance l'installation de l'application en exécutant le fichier téléchargé à l'étape S39. A l'étape S42, le processeur HP1 demande au processeur SE par l'intermédiaire du composant logiciel NAPP d'introduire l'identifiant d'application APID dans la liste des identifiants d'applications PAB mémorisée par le processeur SE pour chaque application de paiement. A l'étape S43, le processeur SE met à jour cette liste. Suite à l'étape S42, le processeur HP1 transmet au serveur HSRV une requête de validation INSVal d'installation d'application contenant l'identifiant NID, le cryptogramme ED1 et l'identifiant APID de l'application installée (étape S44). A l'étape S45 suivante, le serveur HSRV vérifie le cryptogramme ED1. Si le cryptogramme ED1 est correct (étape S46), le serveur HSRV mémorise que l'identifiant NID est lié à l'identifiant d'application APID dans la base IDDB (étape S47). A l'étape S48 suivante, si le cryptogramme ED1 est correct, le serveur HSRV transmet au processeur HP1 un message d'autorisation d'exécution de l'application installée. A l'étape S49 suivante, le processeur HP1 met à jour la base de données ARB en y insérant l'identifiant APID de l'application installée, et lance l'exécution de l'application. Durant son exécution par le processeur HP1, l'application peut accéder au serveur de l'application ASRV ou un serveur associé (à l'étape S50), lequel peut demander au serveur HSRV des informations de profil de l'utilisateur UPRF mémorisées dans la base UPDB, sur la base de l'identifiant NID, et demander à l'utilisateur le cas échéant de compléter ces informations, par exemple en affichant sur un écran d'affichage du dispositif HD1 un formulaire à remplir. Le formulaire affiché peut être pré rempli avec des informations relatives à l'utilisateur, figurant déjà dans la base UPDB. Les informations de profil saisies par l'utilisateur peuvent être transmises par le processeur HP1 à un serveur lié à l'application, comme le serveur ASRV ou le serveur WSRV, qui lui-même les retransmet au serveur HSRV pour mettre à jour la base de données UPDB (étape S51). Durant l'exécution de l'application, le serveur ASRV peut exécuter une transaction classique de paiement en accédant à un réseau bancaire sur la base d'informations d'identification de l'utilisateur obtenues à partir de l'identifiant NID dans la base UPDB.

Il peut être mis à disposition de l'utilisateur des procédures de blocage/déblocage d'une application, et de désinstallation d'une application. Ces procédures se déroulent d'une manière analogue aux étapes S33 à S37, l'étape S33 étant remplacée par l'émission d'une requête correspondante de blocage, déblocage ou de désinstallation, et l'étape S36 étant remplacée par une étape d'exécution de la requête. A cet effet, il peut être prévu un indicateur d'état de blocage qui peut être prévu à chaque ligne de la table de la base IDDB associant un identifiant d'application APID à un identifiant NID de composant logiciel NAPP. S'il s'agit d'une requête de blocage ou de déblocage d'application, le serveur HSRV peut mettre à jour l'indicateur d'état correspondant aux identifiants d'application APID et de composant logiciel NID reçus du processeur HP1. Cet indicateur d'état peut être testé avant que le processeur HP1 exécute l'application à l'étape S49. S'il s'agit d'une requête de désinstallation, le serveur HSRV peut supprimer la ligne de cette table associant les identifiants de composant logiciel et d'application reçus du processeur HP1. Bien entendu, les opérations de blocage/déblocage et de désinstallation d'applications ne sont effectuées qu'après vérification par le serveur HSRV du cryptogramme ED1 fourni par le processeur HP1, et de l'existence d'un lien entre les identifiants NID et APID dans la base IDDB.

Chaque élément de liste PAB mémorisée dans le processeur SE peut être associé à un numéro de priorité et à un indicateur de blocage, accessibles par une commande de configuration mise à disposition de l'utilisateur par l'intermédiaire du processeur HP1. De cette manière, si plusieurs applications de paiement enregistrées dans la liste PAD sont compatibles avec l'identifiant APID transmis par le dispositif POI à l'étape S5, le composant logiciel NAPP active l'application de paiement non bloquée ayant le plus grand numéro de priorité.

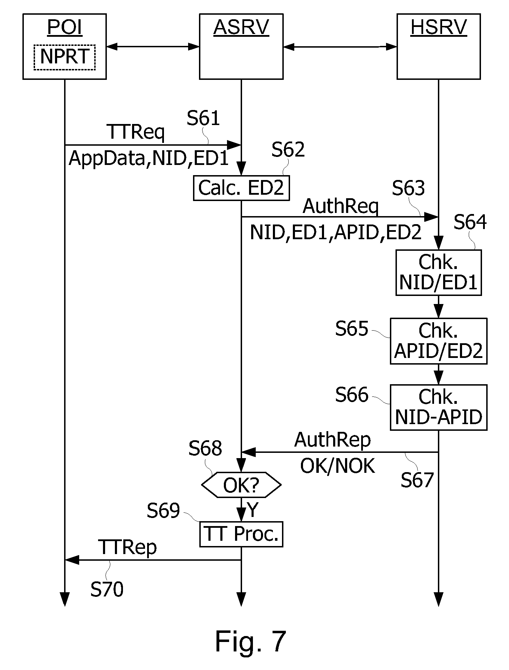

La figure 7 représente une séquence d'étapes S61 à S70 pouvant être déclenchée par le dispositif POI au lancement et lors de l'exécution d'une application à la suite des étapes S9 et S49 ou d'une application de paiement lancée par l'application activée à l'étape S49. Cette séquence d'étapes est exécutée par le dispositif POI, le serveur d'application ASRV et le serveur HSRV. A l'étape S61, le dispositif POI transmet au serveur ASRV une requête de transaction TTReq contenant des données relatives à l'application AppData, l'identifiant du composant logiciel NID reçu à l'étape S4, et le cryptogramme ED1 reçu à l'étape S9. A l'étape S62, le serveur ASRV reçoit cette requête et lance un calcul cryptographique pour obtenir un cryptogramme ED2 notamment à partir de l'identifiant d'application APID. A l'étape S63, le serveur ASRV émet à destination du serveur HSRV une requête d'authentification AuthReq contenant l'identifiant du composant logiciel NID, les cryptogrammes ED1 et ED2 et l'identifiant de l'application APID. A l'étape S64, le serveur HSRV vérifie l'existence de l'identifiant NID dans la base de données IDDB et vérifie le cryptogramme ED1. A l'étape S65, le serveur HSRV vérifie l'existence de l'identifiant d'application APID dans la base ARDB, et vérifie le cryptogramme ED2. A l'étape S66, le serveur HSRV vérifie dans la base de données IDDB que l'application est liée à l'identifiant NID de processeur SE du dispositif HD1 connecté au dispositif POI. A l'étape S67, le serveur HSRV émet à destination du serveur ASRV un message de réponse d'authentification AuthRep indiquant le succès ou l'échec de l'authentification, c'est-à-dire si les cryptogrammes ED1, ED2 reçus sont authentiques, et si l'application ayant l'identifiant APID est bien liée à l'identifiant NID du dispositif HD1 connecté au dispositif POI. A l'étape S68, le serveur ASRV teste le message de réponse d'authentification et si l'authentification a réussi, il exécute les étapes S69 et S70 où il exécute la transaction correspondant à l'application et il transmet au dispositif POI un message de réponse de transaction TTRep à la requête transmise à l'étape S61. Le serveur ASRV peut ainsi être assuré de l'authenticité des identifiants NID et APID.

Le cryptogramme ED2 peut être calculé (à l'étape 62) en appliquant la fonction utilisée pour calculer le cryptogramme ED1, à l'identifiant d'application APID, et éventuellement au cryptogramme ED1 et à d'autres données telles qu'un nombre généré aléatoirement. Les autres données utilisées dans le calcul du cryptogramme ED2, et en particulier le nombre aléatoire sont transmis avec le cryptogramme ED2 pour permettre sa vérification par le serveur HSRV. Si les cryptogrammes sont calculés à l'aide d'une fonction de chiffrement symétrique ou une fonction de hachage, utilisant une clé secrète, les cryptogrammes ED1, ED2 peuvent être vérifiés en les recalculant à l'aide des mêmes clés secrètes et des même données utilisées pour leur premier calcul. Les données secrètes sont mémorisées dans la base KYDB en association avec les identifiants NID, APID. Les données éventuellement utilisées pour le calcul du cryptogramme ED1 peuvent se trouver dans la base IDDB en association avec l'identifiant NID. Les données éventuellement utilisées pour le calcul du cryptogramme ED2 peuvent se trouver dans la base ARDB en association avec l'identifiant APID. Si les cryptogrammes ED1, ED2 ont été calculés à l'aide d'un algorithme de chiffrement asymétrique, ils peuvent être vérifiés en leur appliquant le même algorithme de chiffrement utilisant des clés publiques mémorisées dans la base KYDB, correspondant aux clés secrètes utilisées pour leur calcul.

Bien entendu, le serveur d'authentification HSRV peut en réalité être réalisé par plusieurs serveurs connectés entre eux. Ainsi, la base de clés de chiffrement KYDB peut être accessible par l'intermédiaire d'un serveur spécifique. Les données de chacune des bases IDDB, UPDB, ARDB et KYDB peuvent également être réparties dans plusieurs bases de données accessibles par des serveurs distincts.

Grâce à ces dispositions, l'installation d'une nouvelle application ne nécessite pas d'installer un composant logiciel dans un processeur sécurisé SE du dispositif NFC HD1. Le processeur sécurisé SE est personnalisé une seule fois et pour toutes les applications NFC susceptibles d'être exécutées par le processeur HP1, en recevant le composant NAPP associé à un identifiant unique NID et une ou plusieurs clés secrètes associées. Comme un seul composant logiciel NAPP peut être installé dans le processeur SE, l'identifiant NID peut être utilisé pour identifier le processeur SE. L'installation du composant NAPP dans le processeur SE n'empêche nullement l'installation ou l'exécution d'autres composants logiciels dans le processeur SE. Comme le lien entre une application et le dispositif HD1 d'un utilisateur est établi à l'extérieur du dispositif HD1, à savoir par les bases de données IDDB, UPDB, ARDB, ce lien peut être facilement rétabli pour et à partir d'un autre dispositif NFC, en cas de perte, vol ou échange du dispositif HD1. Les cryptogrammes ED1 et ED2 permettent d'authentifier le processeur SE et l'application. Par ailleurs, il convient de remarquer que les séquences d'étapes décrites précédemment ne font pas intervenir un opérateur de réseau mobile, sauf éventuellement pour établir une communication entre le dispositif HD1 (du type téléphone mobile) et un serveur de téléchargement d'application WSRV.

Il apparaîtra clairement à l'homme de l'art que la présente invention est susceptible de diverses variantes de réalisation et diverses applications. En particulier, l'invention n'est pas limitée aux dispositifs NFC dans lesquels le contrôleur NFCC est connecté au processeur HP1. En effet, le contrôleur NFCC et le processeur sécurisé SE peuvent être intégrés dans une puce associée à un téléphone mobile par un moyen mécanique quelconque (sticker, housse de téléphone mobile). Par exemple, sur la figure 5, la transmission des données nécessaires à l'exécution d'une application par le processeur HP1 peuvent être transmises au processeur HP1 par l'intermédiaire du serveur ASRV connecté au dispositif POI. L'application dans le processeur HP1 peut également être lancée manuellement par l'utilisateur.

Les étapes de téléchargement et d'installation d'une application dans le processeur HP1 ne sont pas non plus nécessaires. Ces opérations peuvent en effet être effectuées lors de l'installation du système d'exploitation MOS dans le processeur HP1. Le dispositif NFC HD1 peut ainsi être livré à un utilisateur avec un certain nombre d'applications déjà installées dans le processeur HP1.

Par ailleurs, selon les applications ("Reader Applications, "Card Applications"), le dispositif HD1 peut établir une liaison sans contact avec un dispositif externe NFC (POI) en mode carte, ou en mode lecteur, ou encore en mode "peer-to-peer". Ainsi, l'exécution de la séquence d'étapes de la figure 6, n'est pas nécessairement effectuée de manière synchrone. En effet, notamment dans le cas où le dispositif POI est un circuit intégré sans contact, les étapes S61 et S70 peuvent être effectuées de manière différées lorsque le dispositif POI peut établir une communication avec le serveur d'application ASRV.

## Revendications

1. Procédé d'exécution d'une application sécurisée dans un dispositif NFC, le procédé comprenant des étapes durant lesquelles :
une liaison sans contact est établie entre un premier dispositif NFC (HD1) et un second dispositif NFC (POI),
le premier dispositif NFC transmet par la liaison sans contact un identifiant (NID) d'un processeur sécurisé (SE) du premier dispositif NFC,
le second dispositif NFC transmet par la liaison sans contact un identifiant d'application (APID) d'une application installée dans le premier dispositif NFC,
le processeur sécurisé transmet par la liaison sans contact des premières données d'authentification (ED1) permettant d'authentifier le processeur sécurisé du premier dispositif NFC, et
le second dispositif NFC transmet à un serveur d'application (ASRV) les premières données d'authentification, le serveur d'application transmet à un serveur d'authentification (HSRV) les premières données d'authentification et des secondes données d'authentification (ED2) permettant d'authentifier l'application correspondant à l'identifiant d'application, le serveur d'authentification vérifie les données d'authentification, et autorise une transaction durant l'exécution de l'application uniquement si le processeur sécurisé et l'application sont authentifiés.

2. Procédé selon la revendication 1, comprenant, avant l'exécution de l'application, des étapes d'installation de l'application dans le premier dispositif NFC, dans lesquelles :
le premier dispositif NFC transmet au serveur d'authentification (HSRV) une requête d'installation d'application comprenant l'identifiant d'application (APID) de l'application, et les premières données d'authentification permettant d'authentifier le processeur sécurisé (SE) du premier dispositif NFC,
le serveur d'authentification vérifie les premières données d'authentification, et si le processeur sécurisé est authentifié, transmet au premier dispositif NFC une adresse de téléchargement (URL) de l'application, et
le premier dispositif NFC télécharge l'application à partir de l'adresse de téléchargement reçue et installe l'application téléchargée.

3. Procédé selon la revendication 2, dans lequel, à la suite de l'installation de l'application, le premier dispositif NFC (HD1) informe le serveur d'authentification (HSRV) de l'installation de l'application en lui fournissant l'identifiant (APID) de l'application installée et les premières données d'authentification, et
le serveur d'authentification vérifie les premières données d'authentification, et si le processeur sécurisé (SE) est authentifié, le serveur d'authentification mémorise l'identifiant d'application en association avec l'identifiant du processeur sécurisé (SE) du premier dispositif NFC.

4. Procédé selon la revendication 3, dans lequel le serveur d'authentification (HSRV) ne transmet pas au premier dispositif NFC (HD1) une adresse de téléchargement de l'application si l'identifiant d'application (APID) est déjà mémorisé en association avec l'identifiant (NID) du processeur sécurisé (SE) du premier dispositif NFC.

5. Procédé selon la revendication 3 ou 4, dans lequel le serveur d'authentification (HSRV) n'autorise pas l'exécution de l'application par les deux dispositifs NFC (HD1, POI) si l'identifiant d'application (APID) n'est pas mémorisé en association avec l'identifiant (NID) du processeur sécurisé (SE) du premier dispositif NFC.

6. Procédé selon l'une des revendications 1 à 5, dans lequel les premières données d'authentification comprennent l'identifiant du processeur sécurisé (NID) et un premier cryptogramme (ED1) calculé par le processeur sécurisé (SE) en appliquant à l'identifiant du processeur sécurisé (NID), un calcul cryptographique utilisant une clé secrète (KY) mémorisée par le processeur sécurisé.

7. Procédé selon l'une des revendications 1 à 6, dans lequel les secondes données d'authentification comprennent l'identifiant du processeur sécurisé (NID), l'identifiant d'application (APID) et un second cryptogramme (ED2) calculé par le serveur d'application en appliquant un calcul cryptographique à l'identifiant d'application (APID), utilisant une clé secrète (KYA) propre à l'application.

8. Procédé selon la revendication 7, dans lequel le second cryptogramme (ED2) est calculé en appliquant le calcul cryptographique à l'identifiant d'application (APID), et au premier cryptogramme (ED1).

9. Procédé selon l'une des revendications 1 à 8, dans lequel le premier et/ou le second cryptogrammes (ED1, ED2) sont calculés à l'aide d'un algorithme de chiffrement symétrique utilisant une clé secrète, ou d'un algorithme de chiffrement asymétrique utilisant une clé privée, ou d'une fonction de hachage appliquée aux données à chiffrer et à la clé secrète.

10. Procédé selon l'une des revendications 1 à 9, dans lequel la vérification de chacun des premier et second cryptogrammes (ED1, ED2) est effectuée en recalculant le cryptogramme à partir des mêmes données et en utilisant une clé de chiffrement accessible au serveur d'authentification.

11. Système d'exécution d'une application sécurisée dans un dispositif NFC, comprenant :
un premier dispositif NFC (HD1) comprenant un composant NFC (NFCC) pour établir une communication sans contact avec un autre dispositif NFC, et un processeur sécurisé (SE) connecté au composant NFC,
un second dispositif NFC (POI) connecté à un serveur d'application (ASRV) pour exécuter une application avec autre dispositif NFC,
**caractérisé en ce qu'**il comprend un serveur d'authentification (HSRV) accessible au serveur d'application (ASRV) et au premier dispositif NFC (HD1), le système étant configuré pour exécuter le procédé selon l'une des revendications 1 à 10.

## Patentansprüche

1. Verfahren zur Ausführung einer gesicherten Anwendung in einer NFC-Vorrichtung, das Verfahren umfassend Schritte, bei denen:
eine kontaktlose Verbindung zwischen einer ersten NFC-Vorrichtung (HD1) und einer zweiten NFC-Vorrichtung (POI) aufgebaut wird,
die erste NFC-Vorrichtung einen Identifizierer (NID) eines gesicherten Prozessors (SE) der ersten NFC-Vorrichtung über die kontaktlose Verbindung überträgt,
die zweite NFC-Vorrichtung einen Anwendungsidentifizierer (APID) einer in der ersten NFC-Vorrichtung installierten Anwendung über die kontaktlose Verbindung überträgt,
der gesicherte Prozessor erste Authentifizierungsdaten (ED1) zum Authentifizieren des gesicherten Prozessors der ersten NFC-Vorrichtung über die kontaktlose Verbindung überträgt, und
die zweite NFC-Vorrichtung die ersten Authentifizierungsdaten an einen Anwendungsserver (ASRV) überträgt, der Anwendungsserver die ersten Authentifizierungsdaten und zweite Authentifizierungsdaten (ED2) zum Authentifizieren der dem Anwendungsidentifizierer entsprechenden Anwendung an einen Authentifizierungsserver (HSRV) überträgt, der Authentifizierungsserver die Authentifizierungsdaten prüft, und eine Transaktion während der Ausführung der Anwendung nur dann genehmigt, wenn der gesicherte Prozessor und die Anwendung authentifiziert werden.

2. Verfahren nach Anspruch 1, umfassend, vor der Ausführung der Anwendung, Schritte der Installation der Anwendung in der ersten NFC-Vorrichtung, bei denen:
die erste NFC-Vorrichtung eine Anwendungsinstallationsanforderung an den Authentifizierungsserver (HSRV) überträgt, die den Anwendungsidentifizierer (APID) der Anwendung und die ersten Authentifizierungsdaten zum Authentifizieren des gesicherten Prozessors (SE) der ersten NFC-Vorrichtung umfasst,
der Authentifizierungsserver die ersten Authentifizierungsdaten prüft, und wenn der gesicherte Prozessor authentifiziert wird, dann überträgt er eine Download-Adresse (URL) zum Herunterladen der Anwendung an die erste NFC-Vorrichtung, und
die erste NFC-Vorrichtung die Anwendung aus der empfangenen Download-Adresse herunterlädt und die heruntergeladene Anwendung installiert.

3. Verfahren nach Anspruch 2, bei dem, nachdem die Anwendung installiert worden ist, die erste NFC-Vorrichtung (HD1) den Authentifizierungsserver (HSRV) über die Anwendungsinstallation informiert, indem sie ihm den Identifizierer (APID) der installierten Anwendung und die ersten Authentifizierungsdaten liefert, und
der Authentifizierungsserver die ersten Authentifizierungsdaten prüft, und wenn der gesicherte Prozessor (SE) authentifiziert wird, dann speichert der Authentifizierungsserver den Anwendungsidentifizierer zusammen mit dem Identifizierer des gesicherten Prozessors (SE) der ersten NFC-Vorrichtung.

4. Verfahren nach Anspruch 3, bei dem der Authentifizierungsserver (HSRV) eine Download-Adresse der Anwendung an die erste NFC-Vorrichtung (HD1) nicht überträgt, wenn der Anwendungsidentifizierer (APID) schon zusammen mit dem Identifizierer (NID) des gesicherten Prozessors (SE) der ersten NFC-Vorrichtung gespeichert ist.

5. Verfahren nach Anspruch 3 oder 4, bei dem der Authentifizierungsserver (HSRV) die Ausführung der Anwendung durch die beiden NFC-Vorrichtungen (HD1, POI) nicht genehmigt, wenn der Anwendungsidentifizierer (APID) nicht zusammen mit dem Identifizierer (NID) des gesicherten Prozessors (SE) der ersten NFC-Vorrichtung gespeichert ist.

6. Verfahren nach einem der Ansprüche 1 bis 5, bei dem die ersten Authentifizierungsdaten den Identifizierer des gesicherten Prozessors (NID) und ein erstes Kryptogramm (ED1) umfassen, das vom gesicherten Prozessor (SE) durch Anwendung einer kryptographischen Berechnung auf den Identifizierer des gesicherten Prozessors (NID) berechnet wird, die einen vom gesicherten Prozessor gespeicherten geheimen Schlüssel (KY) verwendet.

7. Verfahren nach einem der Ansprüche 1 bis 6, bei dem die zweiten Authentifizierungsdaten den Identifizierer des gesicherten Prozessors (NID), den Anwendungsidentifizierer (APID) und ein zweites Kryptogramm (ED2) umfassen, das vom Anwendungsserver durch Anwendung einer kryptographischen Berechnung auf den Anwendungsidentifizierer (APID) berechnet wird, die einen der Anwendung eigenen geheimen Schlüssel (KYA) verwendet.

8. Verfahren nach Anspruch 7, bei dem das zweite Kryptogramm (ED2) durch Anwendung der kryptographischen Berechnung auf den Anwendungsidentifizierer (APID) und auf das erste Kryptogramm (ED1) berechnet wird.

9. Verfahren nach einem der Ansprüche 1 bis 8, bei dem das erste und/oder das zweite Kryptogramme (ED1, ED2) anhand eines symmetrischen Verschlüsselungsalgorithmus, der einen geheimen Schlüssel verwendet, oder eines asymmetrischen Verschlüsselungsalgorithmus, der einen privaten Schlüssel verwendet, oder einer Hackfunktion, die auf die zu verschlüsselnden Daten und auf den geheimen Schlüssel angewendet wird, berechnet werden.

10. Verfahren nach einem der Ansprüche 1 bis 9, bei dem die Prüfung jedes der ersten und zweiten Kryptogramme (ED1, ED2) ausgeführt wird, indem das Kryptogramm aus denselben Daten noch einmal berechnet wird und indem ein für den Authentifizierungsserver zugänglicher Verschlüsselungsschlüssel verwendet wird.

11. System zur Ausführung einer gesicherten Anwendung in einer NFC-Vorrichtung, umfassend:
eine erste NFC-Vorrichtung (HD1), die einen NFC-Bauteil (NFCC) umfasst, um eine kontaktlose Verbindung mit einer anderen NFC-Vorrichtung aufzubauen, und einen mit dem NFC-Bauteil verbundenen gesicherten Prozessor (SE),
eine zweite mit einem Anwendungsserver (ASRV) verbundene NFC-Vorrichtung (POI), um eine Anwendung mit der anderen NFC-Vorrichtung auszuführen,
**dadurch gekennzeichnet, dass** es einen für den Anwendungsserver (ASRV) und die erste NFC-Vorrichtung (HD1) zugänglichen Authentifizierungsserver (HSRV) umfasst, wobei das System konfiguriert ist, um das Verfahren nach einem der Ansprüche 1 bis 10 auszuführen.

## Claims

1. Method of executing a secure application in an NFC device, the method comprising steps during which:
a contactless link is established between a first NFC device (HD1) and a second NFC device (POI),
the first NFC device transmits by the contactless link an identifier (NID) of a secure processor (SE) of the first NFC device,
the second NFC device transmits by the contactless link an application identifier (APID) of an application installed in the first NFC device,
the secure processor transmits by the contactless link first authentication data (ED1) allowing the authentication of the secure processor of the first NFC device, and
the second NFC device transmits to an application server (ASRV) the first authentication data, the application server transmits to an authentication server (HSRV) the first authentication data and second authentication data (ED2) allowing for the authentication of the application corresponding to the application identifier, the authentication server verifies the authentication data and authorizes a transaction during the execution of the application only if the secure processor and the application are authenticated.

2. Method according to claim 1 comprising, before the execution of the application, steps of installation of the application in the first NFC device wherein:
the first NFC device transmits to the authentication server (HSRV) an application installation request comprising an application identifier (APID) of the application and the first authentication data allowing the authentication of the secure processor (SE) of the first NFC device,
the authentication server verifies the first authentication data, and if the secure processor is authenticated, transmits to the first NFC device an application download address (URL), and
the first NFC device downloads the application from the received download address and installs the downloaded application.

3. Method according to claim 2, wherein, after the installation of the application, the first NFC device (HD1) informs the authentication server (HSRV) of the installation of the application by supplying to it the identifier (APID) of the installed application and the first authentication data, and
the authentication server verifies the first authentication data, and if the secure processor (SE) is authenticated, the authentication server stores the application identifier in association with the identifier of the secure processor (SE) of the first NFC device.

4. Method according to claim 3, wherein the authentication server (HSRV) does not transmit to the first NFC device (HD1) an application download address if the application identifier (APID) is already stored in association with the identifier (NID) of the secure processor (SE) of the first NFC device.

5. Method according to claim 3 or 4, wherein the authentication server (HSRV) does not authorize the execution of the application by the two NFC devices (HD1, POI) if the application identifier (APID) is not stored in association with the identifier (NID) of the secure processor (SE) of the first NFC device.

6. Method according to one of claims 1 to 5, wherein the first authentication data comprises the identifier of the secure processor (NID) and a first cryptogram (ED1) calculated by the secure processor (SE) by applying a cryptographic calculation using a secret key (KY) stored by the secure processor to the identifier of the secure processor (NID).

7. Method according to one of claims 1 to 6, wherein the second authentication data comprises the identifier of the secure processor (NID), the application identifier (APID), and a second cryptogram (ED2) calculated by the application server by applying a cryptographic calculation using a secret key (KYA) specific to the application to the application identifier (APID).

8. Method according to claim 7, wherein the second cryptogram (ED2) is calculated by applying the cryptographic calculation to the application identifier (APID) and to the first cryptogram (ED1).

9. Method according to one of claims 1 to 8, wherein the first and/or the second cryptograms (ED1, ED2) are calculated with the aid of a symmetric encryption algorithm using a secret key, or of an asymmetric encryption algorithm using a private key, or of a hashing function applied to the data to encrypt and to the secret key.

10. Method according to one of claims 1 to 9, wherein the verification of each of the first and second cryptograms (ED1, ED2) is performed by recalculating the cryptogram from the same data and by using an encryption key accessible to the authentication server.

11. System for executing a secure application in an NFC device, comprising:
a first NFC device (HD1) comprising an NFC component (NFCC) to establish a contactless communication with another NFC device, and a secure processor (SE) connected to the NFC component,
a second NFC device (POI) connected to an application server (ASRV) to execute an application with another NFC device,
**characterized in that** it comprises an authentication server (HSRV) accessible to the application server (ASRV) and to the first NFC device (HD1), the system being configured to execute the method according to one of claims 1 to 10.
